# EUROPEAN PATENT SPECIFICATION

(11) **EP 0 610 886 B1**
(45) Date of publication and mention of the grant of the patent: **17.10.2001**
(21) Application number: 94101896.2
(22) Date of filing: 08.02.1994
(51) Int. Cl.: G06F 1/00, G01R 31/317, G06F 11/00, G06F 12/14, G06K 19/073

(54) **Microcomputer for IC card**
Mikrorechner für IC-Karte
Microcalculatrice pour carte à circuits intégrés

(30) Priority: 09.02.1993 JP 2146593
(43) Date of publication of application: 17.08.1994
(73) Proprietor: MITSUBISHI DENKI KABUSHIKI KAISHA, Chiyoda-ku Tokyo (JP)
(72) Inventor: Asami, Kazuo, c/o Mitsubishi Elec. Semiconductor, Itami-shi, Hyogo 664 (JP)
(74) Representative: Tiedtke, Harro, Dipl.-Ing.

(56) References cited:
- EP-A- 0 411 255
- ELEKTRONIK, vol.37, no.22, 28 October 1988, MUNCHEN DE pages 204 - 208, XP000051110 TIMM V. 'Mit einem EEPROM an Bord'

## Description

### BACKGROUND OF THE INVENTION

### FIELD OF THE INVENTION:

This invention relates to a microcomputer for an IC card, and more particularly to a microcomputer including a user program for performing various processes and a test program for performing a test (a product test) of the microcomputer.

### DESCRIPTION OF THE RELATED ART:

An IC card including a microcomputer of the foregoing type has been disclosed in, for example, EP-A-0 411 255. Furthermore, ELEKTRONIK, vol. 37, no. 22, 28 October 1988, MUENCHEN DE pages 204-208, XP000051110 TIMM V. 'Mit einem EEPROM an Bord' shows the use of an EEPROM as a nonvolatile memory for data used by a microcomputer.

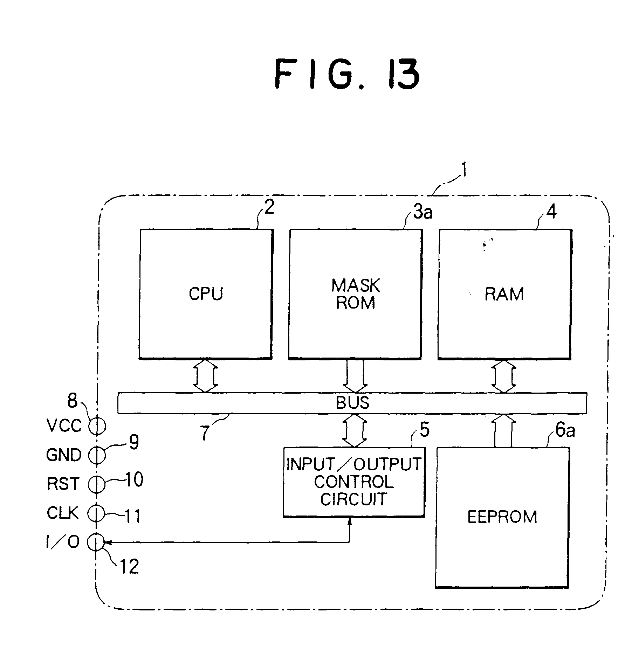

It is known that a test program performs a product test to which the microcomputer is subjected, the test program having a function capable of giving access to an arbitrary address of all regions of the microcomputer to perform satisfactorily the function test. The test program is usually used by a manufacturer (of the microcomputer) or a publisher, and execution of the test program and access to the same must be secured by means of collation of: passwords or the like after the shipment in order to prevent abuse of the test program such that access is, through the test program, intended to be given to a region of a program of another person to copy or falsify the data. Fig. 13 is a functional block diagram of a conventional microcomputer for, an IC card of the foregoing type. Referring to Fig. 13, reference numeral 1 represents a microcomputer for an IC card (hereinafter called a "microcomputer for a card"), 2 represents a CPU for processing data, 3 represents a mask ROM which is a nonvolatile memory in which a variety of programs are stored, 4 represents a RAM which is a volatile memory for temporarily storing data and 5 represents an input/output control circuit for controlling data input and output to and from an external device. Reference numeral 6 represents an EEPROM which is a write-enable nonvolatile memory for storing data of the results of the process or the like and 7 represents a bus for mutually connecting the foregoing elements. Reference numeral 8 represents a power source terminal (a Vcc terminal), 9 represents a ground terminal (a GND terminal), 10 represents a reset terminal (a RST terminal), 11 represents a clock terminal (a CLK terminal) and 12 represents an input/output terminal (an I/O terminal). The foregoing terminals form a terminal group for establishing electrical contact with an external device.

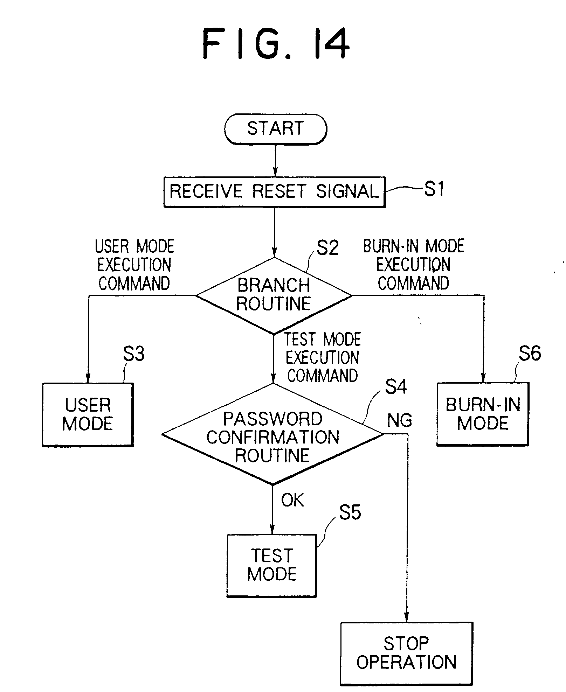

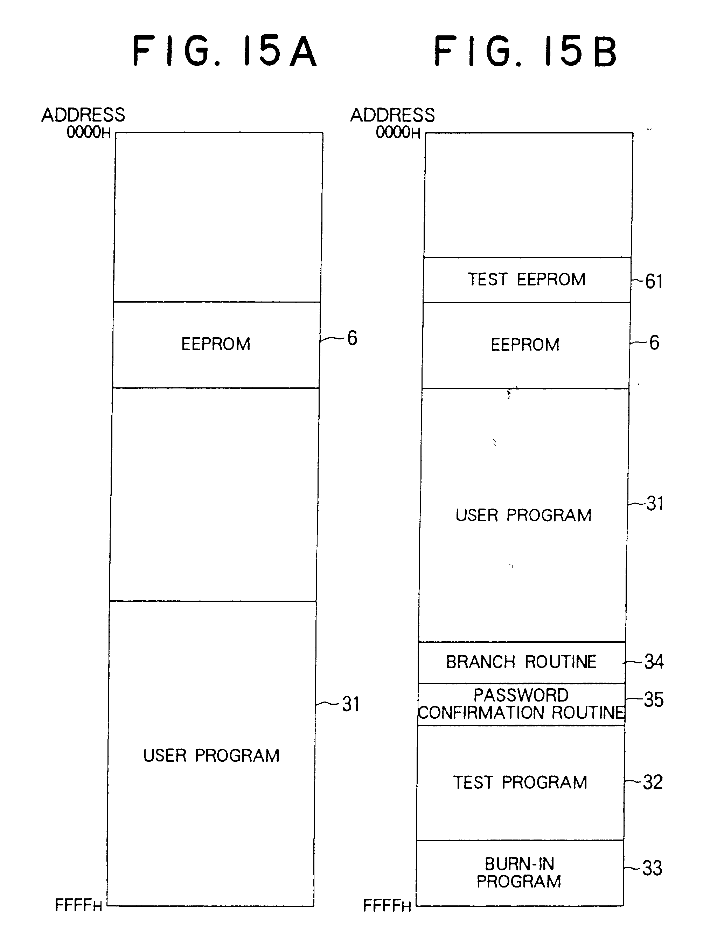

Fig. 14 illustrates a flow chart of the operation of the conventional microcomputer for a card. Figs. 15A and 15B illustrate memory maps for the conventional microcomputer for a card. Fig. 15A illustrates a memory map for use at the time of executing the user program and Fig. 15B is a memory map for use at the time of executing the test program. Referring to Figs. 14, 15A and 15B, a branch routine 34 is performed in step S2 shown in Fig. 14. A user program 31, a test program 32 and a burn-in test program 33 respectively are performed in a user mode (step S3), a test mode (step S5) and a burn-in mode (step S6). A password confirmation routine 35 is performed in a password confirmation routine (step S4). Reference numeral 61 represents a test EEPROM region which cannot be accessed from the user mode. The test EEPROM region 61 is realized by disposing a means for limiting the address to prevent the access thereto in, for example, the user mode. A password to be, in the password confirmation routine 35, subjected to a collation with a key code supplied from outside is stored in the test EEPROM region 61. Referring to Figs. 15A and 15B, the EEPROM 6 and the test EEPROM region 61 are stored in the EEPROM 6, while the branch routine 34, the password confirmation routine 35, the user program 31, the test program 32 and the burn-in test program 33 are stored in the mask ROM 3.

The operation will now be described with reference to the flow chart shown in Fig. 14. The microcomputer 1 for a card is connected to outside by the Vcc terminal 8, the GND terminal 9, the RST terminal 10, the CLK terminal 11 and the I/0 terminal 12. When a reset signal is, through the RST terminal 10, received from outside (step S1), the CPU 2 executes the branch routine 34 previously stored at a predetermined address in the mask ROM 3 (step S2). In the branch routine 34, the branch routine 34 causes branch to the user mode to take place if a user mode execution command has been supplied through the I/O terminal 12 (step S3). In the user mode, serial data supplied from outside is serial/parallel converted by the input/output control circuit 5, the parallel data being then received by the CPU 2 through the bus 7. The CPU 2 processes the data in accordance with the user program 31, resulting in that data which must be temporarily stored is stored in the RAM 4. Data about the results of the process or the like, which must always be stored, is stored in the EEPROM 6. Data to be transmitted outside is parallel/serial converted by the input/output control circuit 5, the serial data being transferred outside through the I/0 terminal 12 (step S3).

If a test mode execution command has been received in the branch routine (step S2) through the I/0 terminal 12, branch to the test mode (step S5) takes place. Prior to performing the branch to the test mode, the password confirmation routine 35 (step S4) is performed in order to secure against the access to the foregoing test program 32. In the password confirmation routine 35, the key code supplied through the I/0 terminal 12 and the password previously stored in the test EEPROM region 61 in the EEPROM 6 are collated with each other. If they agree, branch to the test mode (step S5) is permitted so that the test is performed in accordance with the test program 32. The test program 32, as described above, has the function of accessing to an arbitrary address so that the CPU 2 gives access to each address in accordance with the test program 32 to perform the product test. If the key code and the password do not agree in the password confirmation routine 35 (step S4), branch to the test mode (step S5) cannot be performed, and therefore the operation of, for example, the microcomputer for a card is stopped.

If a burn-in mode execution command has been, through the I/O terminal, supplied in the branch routine (step S2), branch to the burn-in mode (step S6) takes place so that the CPU 2 performs any one of a burn-in test selected from a group consisting of a read-only burn-in test, a write burn-in test and a dummy write burn-in test by selecting a mode in accordance with the burn-in test program 33.

Since the conventional microcomputer for an IC card has been constituted as described above, the test program can be performed even after the shipment if the test mode execution command has been supplied in the branch routine and if the key code supplied from outside and the password agree by chance in the password confirmation routine. In this case, there arises a problem in that access to data of another person can be permitted through the test program and therefore the data can be copied or falsified. Further, the burn-in test program having, similarly to the test program, the function of accessing to an arbitrary address in all regions if the microcomputer is provided with no security means against the execution and access to the burn-in test program. Therefore, branch to the burn-in test program can easily be performed only by inputting a burn-in mode execution command in the branch routine, causing a problem to take place in that access to data of another person can be given through the burn-in test program.

There arises another problem in that the burn-in mode has no means for detecting whether or not a mode has been normally selected during the execution of the burn-in test.

### SUMMARY OF THE INVENTION

The present invention is directed to overcome the foregoing problems and therefore an object is to obtain a reliable microcomputer for an IC card in which branching is limited to a user mode after the microcomputer has been shipped to a user.

In order to achieve the foregoing object there is provided a microcomputer as outlined in the attached claims.

### BRIEF DESCRIPTION OF THE DRAWINGS

Fig. 1 is a block diagram which illustrates the functions of a microcomputer for an IC card according to a first example;
Fig. 2 is a flow chart which illustrates the operation of the microcomputer for an IC card according to the first example;
Fig. 3 is a view which illustrates a memory map for use at the time of executing a test program in the microcomputer for an IC card according to the first example;
Fig. 4 is a block diagram which illustrates the functions of a microcomputer for an IC card according to a second example;
Fig. 5 is a flow chart which illustrates the operation of the microcomputer for an IC card according to the second example;
Fig. 6 is a view which illustrates a memory map for use at the time of executing a test program in the microcomputer for an IC card according to the second example;
Fig. 7 is a flow chart which illustrates the operation of the microcomputer for an IC card according to a third example;
Fig. 8 is a view which illustrates a memory map for use at the time of executing a test program in the microcomputer for an IC card according to the third example;
Fig. 9 is a flow chart which illustrates the operation of the microcomputer for an IC card according to a fourth example;
Fig. 10 is a flow chart which illustrates the operation of the microcomputer for an IC card according to a fifth example;
Fig. 11 is a flow chart which illustrates the operation of the microcomputer for an IC card according to a sixth example;
Fig. 12 is a view which illustrates a memory map for use at the time of executing a test program in the microcomputer for an IC card shown in Fig. 11;
Fig. 13 is a functional block diagram which illustrates the functions of a conventional microcomputer for an IC card;
Fig. 14 is a flow chart which illustrates the operation of the conventional microcomputer for an IC card;
Fig. 15A is a view which illustrates a memory map for use at the time of executing a user program in the conventional microcomputer for an IC card; and
Fig. 15B is a view which illustrates a memory map for use at the time of executing a test program in the conventional microcomputer for an IC card.

### DESCRIPTION OF PREFERRED EXAMPLES

Examples related to a microcomputer for an IC card will now be described with reference to the drawings.

### First Example

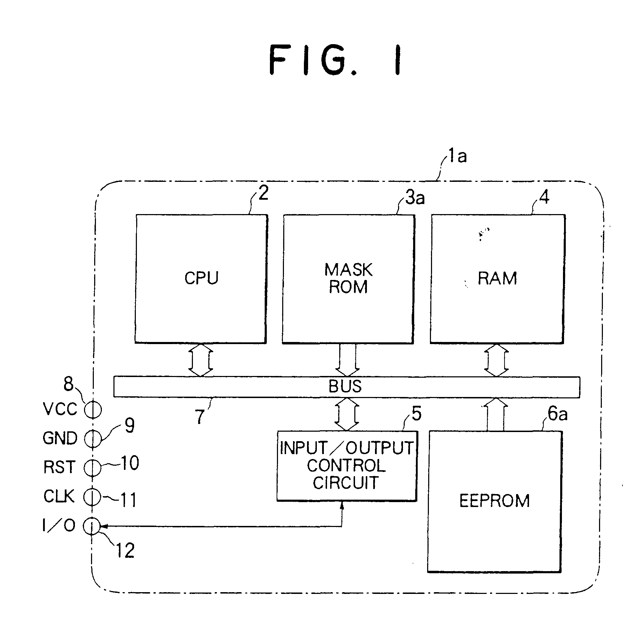

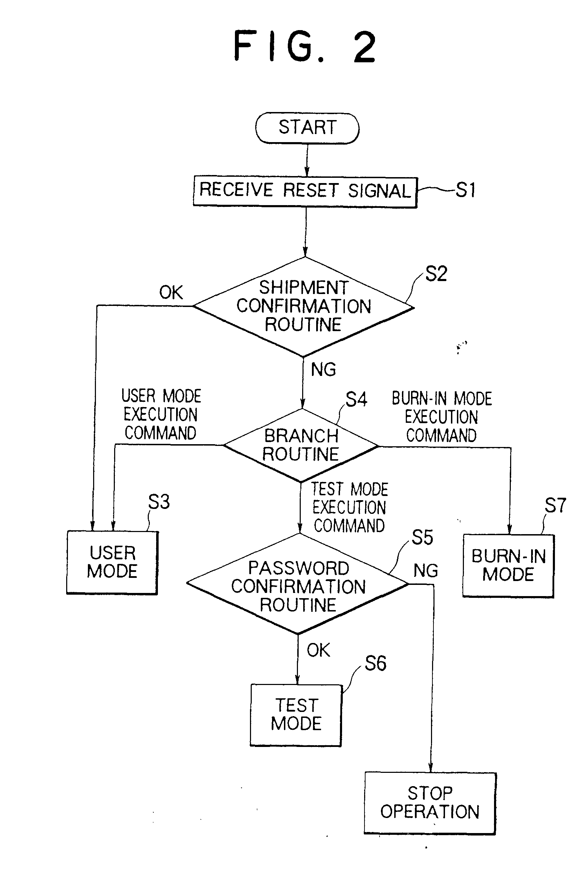

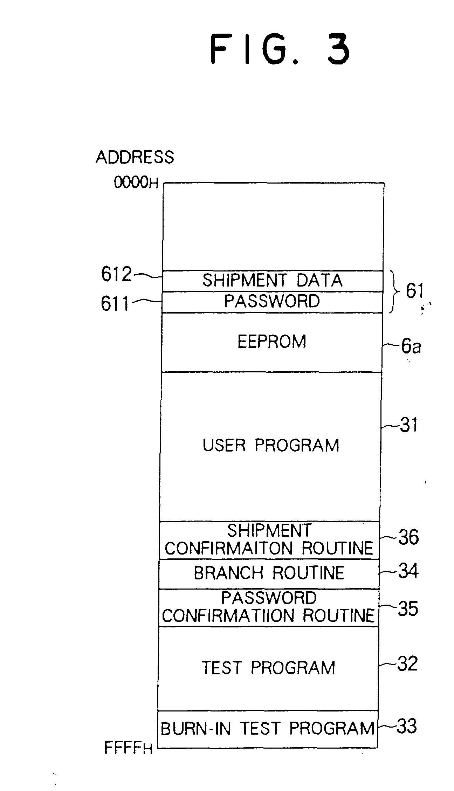

Fig. 1 is a functional block diagram which illustrates a microcomputer for a card according to a first example. Fig. 2 is a flow chart which illustrates the operation of the microcomputer for a card shown in Fig. 1. Fig. 3 is a view which illustrates a memory map for use at the time of executing the test program for the microcomputer for a card shown in Fig. 1. The elements of the microcomputer 1a for a card which are the same or corresponding to those of the conventional microcomputer for a card are given the same reference numerals and their descriptions are omitted here. Referring to the drawings, a mask ROM 3a includes the conventional user program 31, the test program 32, the burn-in test program 33, the branch routine 34, and the password confirmation routine 35, the mask ROM 3a further including a shipment confirmation routine 36 shown in Fig. 3. The EEPROM region 61 of the EEPROM 6a shown in Fig. 3 includes shipment data 612 to be used in the shipment confirmation routine 36 as well as a password code 611 for use in the password confirmation routine 35.

The operation will now be described with reference to an operation flow chart shown in Fig. 2. Prior to shipment of the microcomputer 1a for a card according to this example or an IC card including the foregoing microcomputer, a test mode (step S6) is commenced to execute the test program 32 so that the arbitrary shipment data 622 is written on the test EEPROM region 61. After the shipment data 612 has been written, the microcomputer 1a for a card or the IC card including the foregoing microcomputer is shipped. The password 611 is sometimes written simultaneously with the shipment data 612 or sometimes written during the manufacturing process in order to mutually maintain secrecy of the program between a manufacturer of the microcomputer for a card (or the card) and a publisher. The operations to be performed before the shipment will now be described. When a reset signal has been received through the RST terminal 10 (step S1), the CPU 2 executes the shipment confirmation routine 36 (step S2) previously stored at a predetermined address in the mask ROM 3a. In the shipment confirmation routine 36, whether or not the shipment data 612 has been written on the test EEPROM region 61 is confirmed. Since the shipment data 612 has not been written before the shipment, the process is shifted to the branch routine (step S4). The operations from the branch routine 34 (step S4) are the same as those of the conventional technology in such a manner that branching is performed in accordance with any one of the mode execution commands supplied from outside through the I/O terminal 12 so that the program for each mode is performed.

After the product has been shipped, the shipment data 612 has been written. Therefore, if the foregoing fact is confirmed in the shipment confirmation routine 36 (step S2), the process is branched to the user mode (step S3). Therefore, branching to the test mode or the burn-in mode is inhibited after the shipment. As a result, the execution and access of the test program and the burn-in test program can satisfactorily be secured.

Although the foregoing example, similarly to the conventional technology, includes the password confirmation routine 35 (step S5) to be performed before the branching to the test mode (step S6) is performed, the password confirmation routine 35 (step SS) may be disposed if necessary because the execution and the access of the test program and the burn-in test program have reliably be secured after the shipment has been made due to the employment of the shipment confirmation routine 36 (step S2).

### Second Example

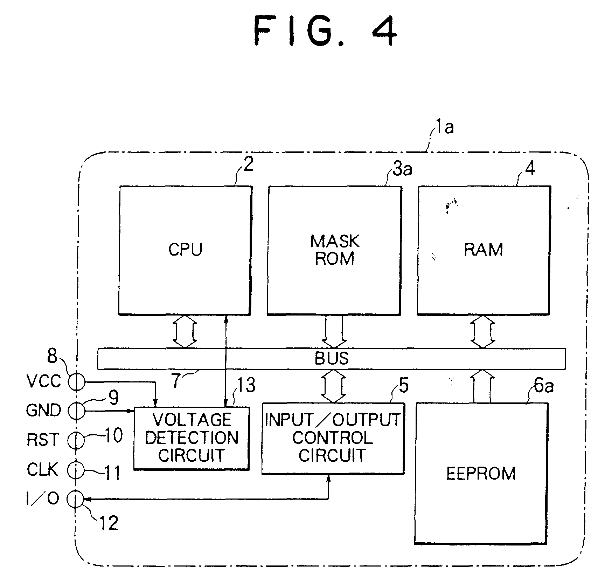

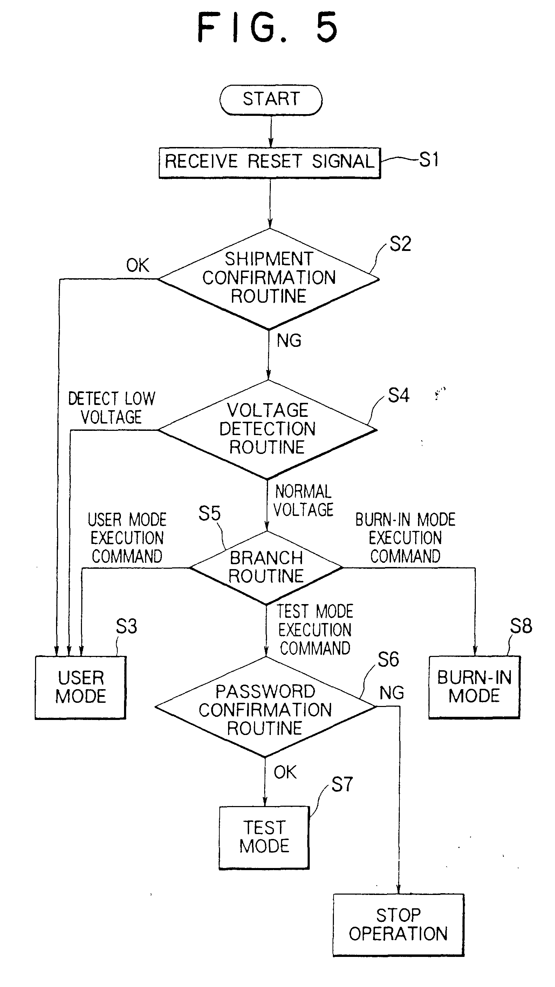

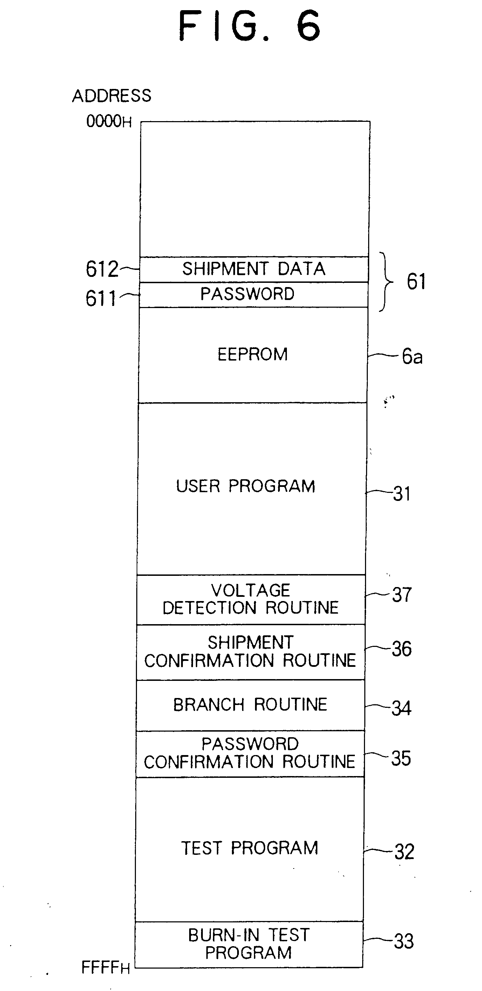

Fig. 4 is a functional block diagram which illustrates a microcomputer for a card according to a second example. The microcomputer for a card according this example comprises, in addition to the microcomputer for a card according to the first example, a voltage detection circuit 13 serving as a voltage detection means for detecting a fact that the power supply voltage at the Vcc terminal 8 has not been lowered. The voltage detection circuit 13 is arranged to prevent undesirable branching to the branch routine depending upon an erroneous discrimination made in the shipment confirmation routine that no shipment data has been written if the power supply voltage is too low although the shipment data has been written. The voltage detection circuit 13 comprises a known voltage comparator, such as M5120TL or LP. Fig. 5 is a flow chart which illustrates the operation of the microcomputer for a card shown in Fig. 4. Fig. 6 is a view which illustrates a memory map for use at the time of executing the test program for the microcomputer for a card shown in Fig. 4. The operation flow chart shown in Fig. 5 has a voltage detection routine (strip S4) disposed next to the shipment confirmation routine (step S2) so that the voltage detection routine 37 shown in Fig. 6 is executed here. The voltage detection routine 37 is, similarly to the shipment confirmation routine 36, included in the mask ROM 3a.

The operation will now be described with reference to the operation flow chart shown in Fig. 5. Similarly to the microcomputer for a card according to the first example, the microcomputer 1a for a card according to this example or the IC card including the microcomputer 1a is, prior to the shipment, brought into a test mode (step S7) in which the test program 32 is executed so that the arbitrary shipment data 612 is written on the test EEPROM region 61.

Since the operations to be performed before the shipment is made are the same as those to be performed in the first example, their descriptions are omitted here.

When a reset signal has been, after the shipment has been made, supplied through the RST terminal 10 (step S1), the CUP 2 executes the shipment confirmation routine 36 (step S2) previously stored at a predetermined address in the mask ROM 3a. In the shipment confirmation routine 36, whether or not the shipment data has been written on the test EEPROM region 61 is confirmed. If the confirmation is made that the shipment data 612 has been written, branching to the user mode (step S3) takes place. In this case, branching to the test mode (step S7) and that to the burn-in mode (step S8) are inhibited.

If the power supply voltage is too low although the shipment data 612 has been written on the test EEPROM region 61, an erroneous discrimination is made in the shipment confirmation routine 36 (step S2) that the shipment data 612 has not been written. Therefore, there is a probability of branching to the branch routine 34 (step S5). Accordingly, the voltage detection routine 37 (step S4) is arranged in such a manner that the power supply voltage at the Vcc terminal 8 is detected by the voltage detection circuit 13. If the detected power supply voltage is lower than a predetermined voltage level (low voltage), the discrimination made in the shipment confirmation routine 36 (step S2) is made invalid and branching to the user mode (step S3) is performed. As a result, the execution and access to the test program and the burn-in test program can reliably be secured after the shipment has been made.

Although the voltage detection routine (step S4) is disposed next to the shipment confirmation routine (step S2) in the foregoing example, a similar effect can be obtained if the voltage detection routine is disposed to be performed prior to performing the shipment confirmation routine. Since the foregoing example includes the shipment confirmation routine 36 (S2) and the voltage detection routine 37 (step S4), the execution and access to the test program and the burn-in test program can reliably be secured after the shipment has been made. Therefore, the password confirmation routine 35 may be disposed if necessary.

### Third Example

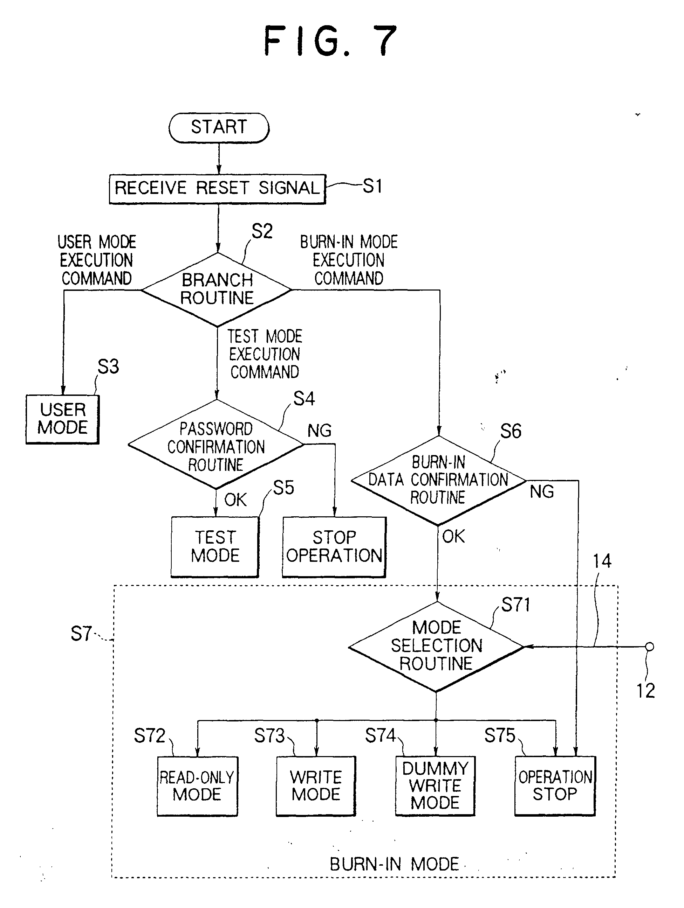

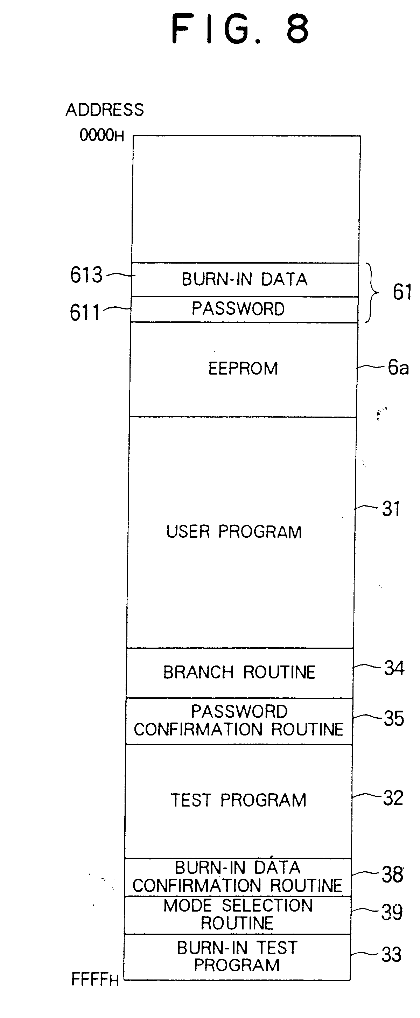

Fig. 7 is a flow chart which illustrates the operation of a microcomputer for a card according to a third example. Fig. 8 is a view which illustrates a memory map to be used at the time of executing the test program for the microcomputer for a card according to this example. The functional block diagram adapted to the microcomputer for a card according to this example is the same as that shown in Fig. 1. The microcomputer for a card according to this example is arranged in such a manner that execution of the burn-in test program with an erroneous burn-in mode execution command is prevented and that the execution and access to the burn-in test program can be secured.

As shown in the operation flow chart shown in Fig. 7, a burn-in data confirmation routine (step S6) is disposed to be performed before the burn-in mode (step S7) is performed. Moreover, the burn-in mode (step S7) includes step S71 which is a mode selection routine, step S72 which is a read-only mode, step S73 which is a write mode, step S74 which is a dummy write mode and step S75 which is an operation stoppage step. As shown in Fig. 8, the burn-in data confirmation routine 38 and the mode selection routine 39 respectively are performed in step S6 and step S71 in burn-in mode S7 shown in Fig. 7, the burn-in data confirmation routine 38 and the mode selection routine 39 being stored in the mask ROM 3a. The mode selection routine 39 is included as a portion of the burn-in test program 33. Prior to executing the burn-in test, the burn-in data 613 must be written on the test EPROM region 61 as shown in Fig. 8.

The operation will now be described with reference to the operation flow chart shown in Fig. 7. Prior to executing the burn-in test program 33, arbitrary burn-in data 613 is previously written on the EEPROM region 61 without exception. When the burn-in mode execution command has been, in the branch routine 34 (step S2) supplied from outside through the I/O terminal 12, branching to the burn-in mode (step S7) takes place similarly to the operation of the conventional technology. Prior to performing branching to the burn-in mode, the burn-in data confirmation routine 38 (step 36) is performed. In the burn-in data confirmation routine, confirmation is made whether or not the burn-in data 613 has been written on the test EEPROM region 61. If it has been written, branching to the burn-in mode (step S7) is permitted. If it has not been written, the operation of, for example, the microcomputer for a card is stopped (step S75). In the burn-in mode (step S7), a mode selection signal 14 is supplied from outside through the I/O terminal 12 in the mode selection routine 9 (step S71). In response to the thus-supplied signal, any one mode is selected from a group consisting of the read-only mode (step S72), the write mode (step S73), the dummy write mode (step S74) and the operation stoppage (step S75).

Since branching to the burn-in mode is not permitted if the burn-in data is not previously written on the test EEPROM region 61 in the EEPROM 6a before the burn-in test is performed, execution of the burn-in test program in accordance with an erroneous burn-in mode execution command is prevented. Further, the execution and access to the burn-in test program can reliably be secured.

### Fourth Example

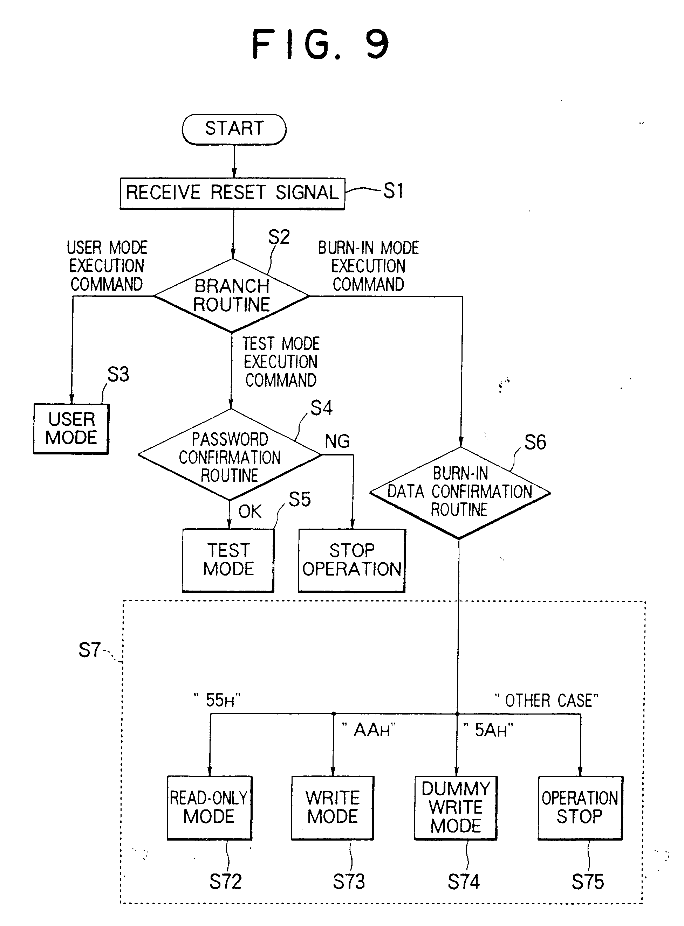

Fig. 9 is a view which illustrates a flow chart of the operation of a microcomputer for a card according to a fourth example. The functional block diagram for the microcomputer for a card according to this example is the same as that shown in Fig. 1. This example is arranged in such a manner that a mode is selected in the burn-in mode in accordance with the burn-in data 613 according to the third example. Therefore, the memory map view according to this example is formed by omitting the mode selection routine 39 from the memory map shown in Fig. 8. Further, the burn-in data 613 to be written on the test EEPROM region 61 is predetermined data with respect to a mode to be executed in the burn-in mode. If a read-only mode is selected for example, the burn-in data 613 to be written is "55_{H}". If the write mode is selected, the burn-in data 613 to be written is "AA_{H}" . If the dummy write mode is selected, the burn-in data 613 to be written is "5A_{H}".

The operation will now be described with reference to the operation flow chart shown in Fig. 9. Prior to executing the burn-in test program 33, the burn-in data 613 for selecting a mode to be executed must previously be written on the test EEPROM region 61 without exception. If a burn-in mode execution command has been, in the branch routine 34 (step S2), supplied from outside through the I/O terminal 12, branching to the burn-in mode (step S7) takes place. However, the burn-in data confirmation routine 33 (step S6) is performed prior to branching to the burn-in mode. In the burn-in data confirmation routine, reference to the contents of the burn-in data 613 in the test EEPROM region 61 is made. If the burn-in data 613 is "55_{H}", the read-only mode (step S72) is executed. If it is "AA_{H}", the write mode (step S73) is executed. If it is "5A_{H}", the dummy write mode (step S74) is executed. If the burn-in data 613 is data except the foregoing data, the operation is stopped (step S75).

As described above, this example is arranged in such a manner that the burn-in data 613 is used to discriminate whether or not branching to the burn-in mode (step S7) has been permitted and the same is used to detect the mode to be selected in the burn-in mode (step S7), Therefore, the necessity of disposing the routine for supplying, from outside, the mode selection signal for selecting a mode in the burn-in mode in the mode selection routine (step S71) shown in Fig. 7 according to the third example can be eliminated.

### Fifth Example

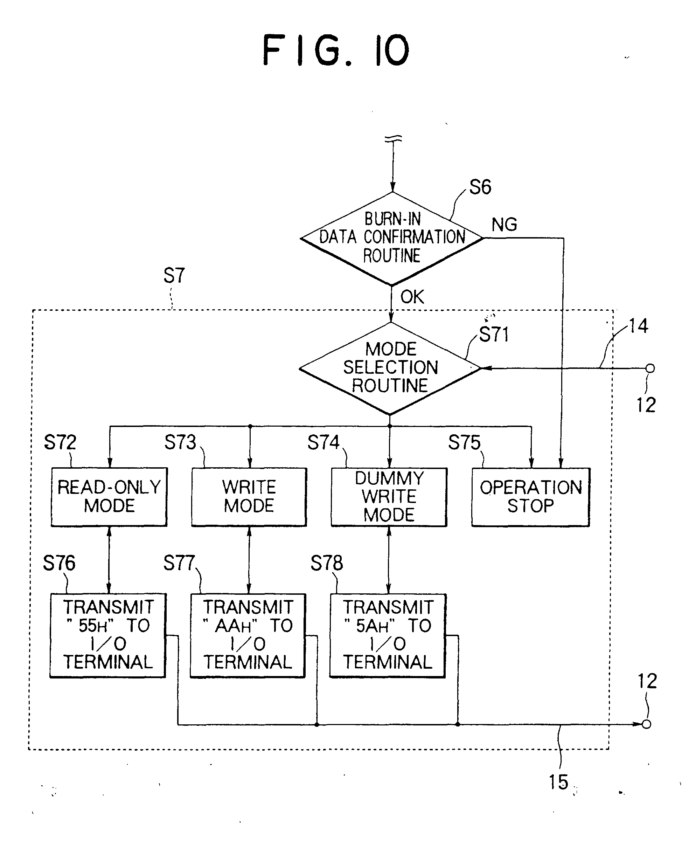

Fig. 10 is a partial view of a flow chart which illustrates the operation of a microcomputer for a card according to a fifth example, wherein a portion at which the branch routine is branched to the burn-in mode. The overall operation is the same as that according to the third example shown in Fig. 7. The microcomputer for a card according to this example is arranged in such a manner that a discrimination signal representing a mode that is being executed during the execution of the burn-in test is transmitted to the outside. In order to realize this, the burn-in test program 33 has a discrimination signal output step (steps S76 to S78) for transmitting, to the I/O terminal 12, a mode discrimination signal 15 representing the mode, which is being executed. The residual portions are the same as those according to the third example, the functional block diagram is the same as that shown in Fig. 1 and the memory map shown in Fig. 6 is employed.

The operation will now be described with reference to an operation flow chart shown in Fig. 10. When a burn-in mode execution command is supplied in the branch routine, branching to the burn-in mode (step S7) takes place similarly to the operation of the conventional technology. Prior to performing branching to the burn-in mode, the burn-in data confirmation routine 38 (step S6) is performed. In the burn-in data confirmation routine, conformation is made whether or not the burn-in data 613 has been written on the test EEPROM region 61. If it has been written, branching to the burn-in mode (step S7) is permitted. If it has not been written, the operation of, for example, the microcomputer for a card is stopped (step S75). In the burn-in mode (step S7), the mode selection signal 14 is, in the mode selection routine 39 (step S71), supplied from outside through the I/0 terminal 12. In response to the foregoing signal, a mode is selected from a group consisting of the read-only mode (step S72), the write mode (step S73), the dummy write mode (step S74) and the operation stop (step S75). During execution of the read-only mode (step S72), "55_{H}" is, as the mode discrimination signal 15, always transmitted to the I/0 terminal 12 (step 576). During execution of the write mode (step S73), "AA_{H}" is, as the mode discrimination signal 15, always transmitted (step S77). During execution of the dummy write mode (step S74), "5A_{H}" is, as the mode discrimination signal 15, always transmitted (step S78).

By transmitting the mode discrimination signal representing the mode, which is being executed in the burn-in test, in the burn-in test, the mode which is being executed can be discriminated from outside.

### Sixth Example

An example of a microcomputer for a card established by combining the second example and the fifth example will now be described.

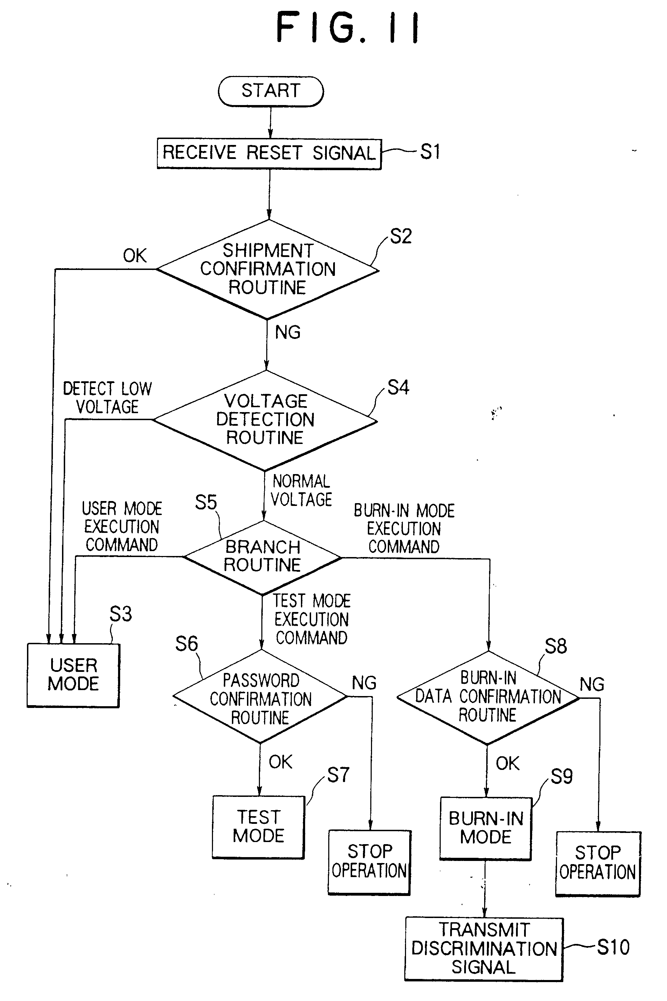

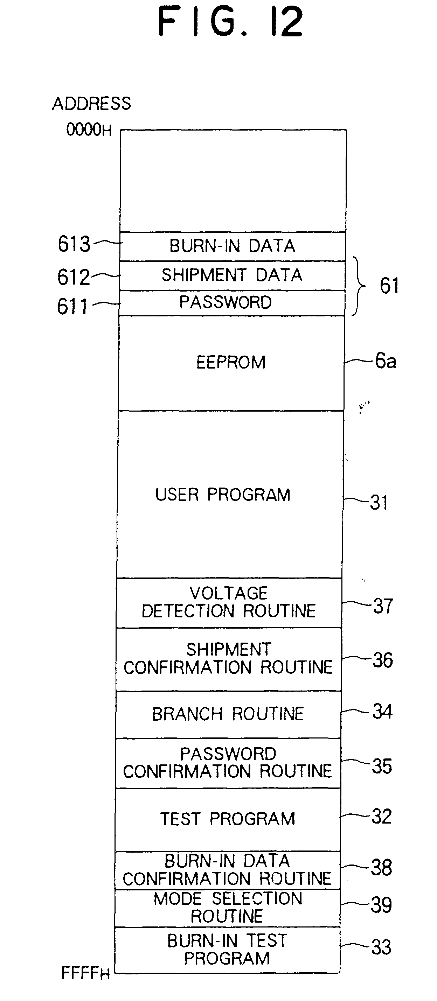

Fig. 11 is a flow chart which illustrates the operation of the microcomputer for a card according to this example. Fig. 12 is a view which illustrates a memory map for use at the time of executing the test program in the microcomputer for a card. The functional block diagram for the microcomputer for a card according to this example is the same as that shown in Fig. 4. In each of the drawings, the same reference numerals are given to the same elements as those according to the foregoing examples. In this example, the shipment confirmation routine 36 (step S2_) and the voltage detection routine 37 (step S4) are disposed to be performed before the branch routine 34 (step S5) is performed. Furthermore, the password confirmation routine 35 (step S6) is disposed to be performed before the test mode (step S7) is performed. The burn-in data confirmation routine 38 (step S8) is disposed to be performed before the burn-in mode (step S9) is performed. Further, the burn-in test program 33 to be executed in the burn-in mode (step S9) includes a discrimination signal output step (step S10) for generating a signal representing a mode which is being executed. The password 611, the shipment data 612 and the burn-in data 613 are written on the test EEPROM region 61 of the EEPROM 6a (see Fig. 12) .

The operation will now be described in brief with reference to the operation flow chart shown in Fig- 11. Prior to the shipment of the microcomputer 1a for a card according to this example or an IC card including the microcomputer 1a, the test mode (step S7) is commenced so that the test program 32 is executed so that arbitrary shipment data 612 is written on the EEPROM region 61.

When a reset signal has been supplied through the RST terminal 10 after the shipment has been made (step S1), the CPU 2 executes the shipment confirmation routine 36 (step S2) previously stored at a predetermined address in the mask ROM 3a. In the shipment confirmation routine 36, confirmation is made whether or not the shipment data 612 has been written on the test EEPROM region 61. If it has been written, branching to the user mode (step S3) takes place and branching to the test mode (step S7) and that to the burn-in mode (step S8) are inhibited.

If the power supply voltage is too low although the shipment data 612 has been written on the test EEPROM region 61, an erroneous discrimination is made that the shipment data 612 has not been written in the shipment confirmation routine 36 (step S2). In this case, there is a possibility of branching to the branch routine 34 (step SS). Accordingly, the power supply voltage at the Vcc terminal B is detected by the voltage detection circuit 13 in the voltage detection routine 37 (step S4). If the detected power supply voltage is lower than a predetermined voltage (low voltage), the discrimination made in the shipment confirmation routine 36 (step S2) is made invalid and branching to the user mode (step S3) takes place. As a result, the execution and access to the test program and the burn-in test program can reliably be secured after the shipment has been made.

If, for example, the burn-in mode (step S9) is performed before the shipment, the burn-in data 613 is previously written on the test EEPROM region 61. If the fact that the burn-in data 613 has been written has been confirmed in the burn-in data confirmation routine (step S8), branching to the burn-in mode (step S9) is permitted so that the burn-in test program 33 is executed. In order to discriminate the mode among the read-only mode, the write-mode and the dummy write mode which is being executed in the burn-in mode (step S9), the mode discrimination signal is transmitted to the outside through the I/O terminal 12 in the discrimination signal output step (step S10). As a result, execution of the burn-in test program in accordance with an erroneous burn-in mode execution command can be prevented. Further, execution and access to the burn-in test program can be secured. Moreover, the mode, which is being executed in the burn-in mode (step S9), can be discriminated from the mode discrimination signal.

The foregoing examples including the sixth example may be combined variously so that a microcomputer for an IC card having a plurality of desired functions can be realized.

As described above, the first example is arranged in such a manner that the shipment data is written in the test EEPROM region before the shipment and the shipment confirmation routine is disposed to be performed before the branch routine is performed. Therefore, only the user program can be performed after the shipment has been made. As a result, an effect can be obtained in that a reliable microcomputer for a card can be obtained in which execution and access to the test program and the burn-in test program can further reliably be secured.

According to the second example, the arrangements are employed in addition to the first example such that the voltage detection circuit for detecting the power supply voltage is included and the shipment confirmation routine and the voltage detection routine are disposed to be performed before the branch routine is performed. Therefore, only the user program can be executed after the shipment has been made even if the power supply voltage is low. As a result, an erroneous discrimination that can be made in the shipment confirmation routine due to lowering of the power supply voltage can be prevented. As a result, an effect can be obtained in that a further reliable microcomputer for a card can be obtained.

According to the third example, the burn-in data confirmation routine is disposed to be performed before branching to the burn-in test program takes place when the burn-in mode execution command has been received, the burn-in data is written on the test EEPROM region before the burn-in test program is performed, and branching to the burn-in test is inhibited if the burn-in data has not been written on the test EEPROM region in the burn-in data confirmation routine. As a result, the burn-in test program cannot easily be executed, and execution of the burn-in test program in accordance with an erroneous execution command is prevented. Therefore, an effect can be obtained in that a microcomputer for an IC card can be obtained in which execution and access to the burn-in test program can be secured.

According to the fourth example, the burn-in test program includes the discrimination signal output step in which a mode discrimination signal representing each mode is always transmitted to the outside through the input/output terminal during execution of each mode. Therefore, an effect can be obtained in that a microcomputer for a card, the current mode of which can be discriminated from outside can be obtained.

## Claims

1. A microcomputer (**1a**) for an IC card comprising:
a mask ROM (**3a**) for storing a user program (**31**), a test program (**32**) and a branch routine (**34**) for selectively branching to said programs in accordance with an execution command;
a CPU **(2)** for processing data in accordance with said routine and said programs stored in said mask ROM;
a RAM (**4**) for temporarily storing data;
an EEPROM (**6a**) which stores data which must be memorized and which includes a test EEPROM region (**61**) which cannot be accessed from said user program;
an input/output control circuit (**5**) for controlling input/output of data to and from outside;
a terminal group (**8-12**) for establishing the electrical connections with outside; and
a bus (**7**) for mutually connecting said mask ROM (**3a**), said CPU (**2**), said RAM (**4**), said EEPROM (**6a**) and said input/output control circuit (**5**), wherein said terminal group includes a power source terminal **(8)**;
**characterized by**
voltage detection means (**13**) for detecting a fact that the power supply voltage of said power source terminal has not been lowered;
said mask ROM including a shipment confirmation routine (**36**) to be performed before said branch routine is performed, and further including a voltage detection routine (**37**) for detecting the power supply voltage of said power source terminal before or after said shipment confirmation routine has been performed; and
said test EEPROM region including a region on which shipment data (**612**) representing that said microcomputer has been shipped is written;
wherein branching to said user program takes place without exception in a case where lowering of said power supply voltage of said power source terminal has been detected in said voltage detection routine even if a fact that said shipment data has not been written on said test EEPROM region has been confirmed in said shipment confirmation routine.

2. A microcomputer according to claim 1, **characterized in that** said mask ROM is capable of storing also a burn-in test program (**33**) and a burn-in data confirmation routine (**38**) to be performed before branching to said burn-in test program takes place, said test EEPROM region includes a region on which burn-in data (**613**) for declaring that said burn-in test program has been previously executed is written, and branching to said burn-in test program takes place without exception if a fact has been confirmed in said burn-in data confirmation routine that said burn-in data has not been written in said test EEPROM region.

3. A microcomputer according to claim 2, **characterized by** said burn-in test program having a plurality of modes (**S72-S75**); said terminal group including an input/output terminal (**12**); and said burn-in test program including a discrimination signal output step (**S10; S76-S78**) in which a mode discrimination signal (**15**) representing a mode among said plurality of said modes which is being executed is transmitted to outside through said input/output terminal.

## Patentansprüche

1. Mikrocomputer für eine IC-Karte mit
einem Masken-Festwertspeicher (**3a**) zum Speichern eines Benutzerprogramms (**31**), eines Testprogramms (**32**) und einer Verzweigungsroutine (**34**) zur wahlweisen Verzweigung zu diesen Programmen entsprechend einem Ausführungsbefehl;
einer Zentraleinheit (**2**) zur Datenverarbeitung entsprechend dieser Routine und den Programmen, die in dem Masken-Festwertspeicher gespeichert sind;
einem Speicher mit wahlfreiem Zugriff (**4**) zur zeitweiligen Datenspeicherung;
einem elektrisch löschbaren, programmierbaren Festwertspeicher (**6a**), der zu speichernde Daten speichert und der einen Testbereich (**61**) für den elektrisch löschbaren, programmierbaren Festwertspeicher umfaßt, auf den seitens des Benutzerprogramms nicht zugegriffen werden kann;
einem Eingangs/Ausgangs-Steuerschaltkreis (**5**) zum Steuern einer Datenein- und -ausgabe von und nach Außen;
einer Anschlußgruppe (**8-12**) zum Bereitstellen der elektrischen Verbindungen nach Außen; und
einer Sammelleitung (**7**) zum gegenseitigen Verbinden der Bauelemente, wobei die Anschlußgruppe einen Anschluß (**8**) zur Leistungsversorgung aufweist;
**gekennzeichnet durch**
eine Spannungserfassungseinrichtung (**13**) zum Erfassen der Tatsache, ob die Leistungsversorgungsspannung an dem Leistungsversorgungsanschluß nicht abfallen ist;
wobei der Masken-Festwertspeicher eine Auslieferungsbestätigungsroutine (**36**) umfaßt, die vor der Verzweigungsroutine durchzuführen ist, und zudem eine Spannungserfassungsroutine (**37**) umfaßt, um die Leistungsversorgungsspannung an dem Leistungsversorgungsanschluß vor oder nach der Durchführung der Auslieferungsbestätigungsroutine zu erfassen; und
wobei der Testbereich für den elektrisch löschbaren, programmierbaren Festwertspeicher einen Bereich umfaßt, in dem Auslieferungsdaten (**612**) abgelegt sind, denen die Auslieferung des Mikrocomputers entnehmbar ist;
wobei die Verzweigung zu dem Benutzerprogramm ausnahmslos dann stattfindet, wenn ein Abfallen der Leistungsversorgungsspannung an dem Leistungsversorgungsanschluß in der Spannungserfassungsroutine erfaßt wurde, und zwar auch bei einer dahingehenden Bestätigung in der Auslieferungsbestätigungsroutine, daß die Auslieferungsdaten nicht in den Testbereich für den elektrisch löschbaren, programmierbaren Festwertspeicher geschrieben wurden.

2. Mikrocomputer gemäß Anspruch 1, **dadurch gekennzeichnet, daß** der Masken-Festwertspeicher in der Lage ist, auch ein Einbrenn-Testprogramm (**33**) und eine Einbrenn-Daten-Bestätigungsroutine (**38**) zu speichern, die vor einer Verzweigung zu dem Einbrenn-Testprogramm auszuführen ist, der Testbereich für den elektrisch löschbaren, programmierbaren Festwertspeicher einen Bereich aufweist, in dem Einbrenndaten (**613**) als vorläufige Information hinsichtlich einer Ausführung des Einbrenn-Testprogramms eingeschrieben werden, und eine Verzweigung zu dem Einbrenn-Testprogramm ausnahmslos vorgenommen wird, wenn in der Einbrenn-Daten-Bestätigungsroutine bestätigt wird, daß die Einbrenndaten nicht in dem Testbereich des elektrisch löschbaren, programmierbaren Festwertspeichers gespeichert sind.

3. Mikrocomputer gemäß Anspruch 2, **dadurch gekennzeichnet, daß** das Einbrenn-Testprogramm eine Vielzahl an Betriebsarten (**S72-S75**) aufweist; daß die Anschlußgruppe einen Ein/Ausgangsanschluß (**12**) aufweist; und das Einbrenn-Testprogramm einen Unterscheidungssignal-Ausgabeschritt aufweist (**S10; S76-S78**) aufweist, in dem ein eine vorherrschende Betriebsart aus der Vielzahl an Betriebsarten darstellendes Betriebsarten-Unterscheidungssignal (**15**) über den Ein-/Ausgangsanschluß nach Außen übertragen wird.

## Revendications

1. Un micro-ordinateur (1a) pour une carte à circuit intégré comprenant
une mémoire ROM à masque (3a) pour enregistrer un programme d'utilisateur (31), un programme de test (32) et une routine de branchement (34) pour effectuer un branchement sélectif vers ces programmes conformément à un ordre d'exécution;
une unité centrale (2) pour traiter des données conformément à cette routine et aux programmes enregistrés dans la mémoire ROM à masque;
une mémoire RAM (4) pour enregistrer temporairement des données,
une mémoire EEPROM (6a) qui enregistre des données devant être mémorisées et qui comprend une région de mémoire EEPROM de test (61) à laquelle on ne peut pas accéder à partir du programme d'utilisateur;
un circuit de commande d'entrée/sortie (5) pour commander l'entrée/sortie de données en relation avec l'extérieur;
un groupe de bornes (8-12) pour établir les connexions électriques avec l'extérieur; et
un bus (7) pour connecter mutuellement la mémoire ROM à masque (3a), l'unité centrale (2), la mémoire RAM (4), la mémoire EEPROM (6a) et le circuit de commande d'entrée/sortie (5), le groupe de bornes comprenant une borne de source d'alimentation (8);
**caractérisé par**
des moyens de détection de tension (13) pour détecter le fait que la tension d'alimentation de la borne de source d'alimentation n'a pas été abaissée;
la mémoire ROM à masque contenant une routine de confirmation d'expédition (36) destinée à être exécutée avant l'exécution de la routine de branchement, et contenant en outre une routine de détection de tension (37) pour détecter la tension d'alimentation de la borne de source d'alimentation avant ou après l'exécution de la routine de confirmation d'expédition; et
la région de mémoire EEPROM de test incluant une région dans laquelle sont écrites des données d'expédition (612) représentant le fait que le micro-ordinateur a été expédié;
dans lequel le branchement vers le programme d'utilisateur a lieu sans exception dans un cas dans lequel l'abaissement de la tension d'alimentation de la borne de source d'alimentation a été détecté dans la routine de détection de tension, même si le fait que les données d'expédition n'ont pas été écrites dans la région de mémoire EEPROM de test a été confirmé dans la routine de confirmation d'expédition.

2. Un micro-ordinateur selon la revendication 1, **caractérisé en ce que** la mémoire ROM à masque est capable d'enregistrer également un programme de test de déverminage (33) et une routine de confirmation de données de déverminage (38) à exécuter avant qu'un branchement vers le programme de test de déverminage ait lieu, la région de mémoire EEPROM de test comprend une région dans laquelle sont écrites des données de déverminage (613) pour déclarer que le programme de test de déverminage a été exécuté précédemment, et le branchement vers le programme de test de déverminage a lieu sans exception s'il a été confirmé dans la routine de confirmation de données de déverminage que les données de déverminage n'ont pas été écrites dans la région de mémoire EEPROM de test.

3. Un micro-ordinateur selon la revendication 2, **caractérisé en ce que** le programme de test de déverminage comporte une multiplicité de modes (S72 - S75); le groupe de bornes comprend une borne d'entrée/sortie (12); et le programme de test de déverminage comprend une étape d'émission de signal de discrimination (S10; S76 - S78) dans laquelle un signal de discrimination de mode (15) représentant un mode qui est en cours d'exécution parmi la multiplicité de modes, est émis vers l'extérieur par l'intermédiaire de la borne d'entrée/sortie.
